# EUROPÄISCHE PATENTSCHRIFT

(11) **EP 0 407 724 B1**
(45) Veröffentlichungstag und Bekanntmachung des Hinweises auf die Patenterteilung: **22.09.1993**
(21) Anmeldenummer: 90110426.5
(22) Anmeldetag: 01.06.1990
(51) Int. Cl.: A01C 7/04, A01B 37/00

(54) **Einzelkornsägerät**
Single seed sowing machine
Semoir monograine

(30) Priorität: 14.07.1989 DE 3923222; 27.04.1990 DE 4013531
(43) Veröffentlichungstag der Anmeldung: 16.01.1991
(73) Patentinhaber: Amazonen-Werke H. Dreyer GmbH & Co. KG, D-49205 Hasbergen (DE)
(72) Erfinder: Gattermann, Bernd, D-2872 Hude 1 (DE); Kemper, Martin, D-4506 Hagen am T.W. (DE); von Büllow, Hans, D-4500 Osnabrück (DE); Lührmann, Johannes, D-4512 Wallenhorst (DE); Scheufler, Bernd, Dr.-Ing., D-4507 Hasbergen (DE)

(56) Entgegenhaltungen:
- EP-A- 0 251 053
- DE-A- 3 306 804
- DE-U- 8 525 904
- FR-A- 1 422 731
- FR-B- 1 456 882

## Beschreibung

Die Erfindung betrifft ein Einzelkornsägerät mit mehreren im Abstand zueinander an einem Rahmen nebeneinander angeordneten Einzelkornsäaggregaten nach dem Oberbegriff von Anspruch 1.

Derartige Einzelkornsägeräte (Siehe DE-U-8525904) sind seit langer Zeit in der landwirtschaftlichen Praxis bekannt. Die nebeneinander an dem Rahmen des Einzelkornsägerätes angeordneten Einzelkornsäaggregate weisen jeweils eine Saatgutvereinzelungsvorrichtung auf, so daß das jeweils auszusäende Saatgut mit einem bestimmten, einstellbaren Abstand der einzelnen Saatkörner zueinander innerhalb einer Saatreihe im Boden abgelegt wird. Das Aufbereiten des Bodens vor dem Einsatz der Einzelkornsägeräte, d.h. des Saatbettes, läßt sich auf verschiedenste Weise durch den Einsätz verschiedenster Bodenbearbeitungsgeräte durchführen. Die gebräuchlichste Art und Weise der Saatbettbereitung besteht aus einer ganzflächigen Bodenbearbeitung, wobei die gesamte Bodenoberfläche des zu bestellenden Ackers bearbeitet wird, obgleich die Ablage des Saatgutes in großen Reihenabständen, von beispielsweise 75 cm für Mais, erfolgt. Zur Saatbettbereitung kommen sehr häufig rotierend angetriebene Bodenbearbeitungsgeräte mit einer nachgeschalteten Nachlaufwalze zur Rückverfestigung des bearbeiteten Bodens zum Einsatz, wobei diese Bodenbearbeitungsgeräte sowohl auf gepflügten als auch auf ungepflügten Ackerflächen zur Saatbettbereitung eingesetzt werden. Die Rückverfestigung des vom Bodenbearbeitungsgerät bearbeiteten Bodens erfolgt ebenfalls ganzflächig oder streifenförmig von der hinter dem Bodenbearbeitungsgerät angeordneten Nachlaufwalze. Eine gute Rückverfestigung des bearbeiteten Bodens bildet die Grundlage für ein ordnungsgemäßes Auflaufen des im Boden abgelegten Saatgutes.

Die bei der Rückverfestigung des bearbeiteten Bodens bei der Saatbettbereitung entstehende relativ glatte Bodenoberfläche, wirkt sich jedoch bei der Aussaat von Saatkörnern mit einem großen Reihenabstand mittels der Einzelkornsägeräte nachteilig aus, da es besonders auf erosionsgefährdeten Böden zwischen den einzelnen Saatreihen zum Wegschwemmen oder Wegtragen von Bodenteilen kommt. Dieses Wegschwemmen oder Wegtragen der Bodenteile wird durch die verfestigten Bereiche, besonders zwischen den einzelnen Saatreihen, begünstigt, weil die Bodenoberfläche zwischen den Reihen relativ glatt ist und dem Wind oder dem Regenwasser eine gute Angriffsfläche bietet, so daß es zu Bodenerosionen kommen kann.

Der Erfindung liegt nun die Aufgabe zugrunde, beim Einsatz von Einzelkornsägeräten auf erosionsgefährdeten Böden den Bodenerosionen mit einfachsten Mitteln entgegen zu wirken.

Diese Aufgabe wird in erfindungsgemäßer Weise dadurch gelöst, daß in dem Zwischen-bereich zwischen oder im Fahrtrichtung vor den Einzelkornsäaggregaten Bodenlockerungselemente wie beispielsweise Striegelelemente etc., angeordnet sind.

Infolge dieser Maßnahme wird die Bodenoberfläche zwischen den einzelnen Saatreihen bzw. Zwischen oder vor den Einzelkornsäaggregaten aufgelockert, so daß eine krümelige, lockere Bodenoberfläche zwischen den Saatreihen und/oder hinter den Einzelkornsäaggregaten entsteht. Diese grobflächige Bodenstruktur der Bodenoberfläche stellt einen wirksamen Schutz vor Bodenerosionen dar und verhindert gleichzeitig ein Austrocknen der Bodenoberfläche.

Zur Erzeugung einer gelockerten, krümeligen Bodenoberfläche jeweils zwischen benachbarten Einzelkornsäaggregaten ist erfindungsgemäß vorgesehen, daß die Striegelelemente als sogenannte Exaktstriegel mit Zustreichelementen, die schräg zur Fahrtrichtung angestellt und im wesentlichen parallel zur Bodenoberfläche verlaufen, ausgebildet sind.

Bei einer anderen Ausführungsform ist in erfindungsgemäßer Weise vorgesehen, daß die Striegelelemente als aufrecht stehende Elemente ausgebildet sind, die mit ihren freien Enden in den Boden eingreifen.

Bei hinter einer Nachlaufwalze angeordneten Einzelkornsäaggregaten ist in erfindungsgemäßer Weise vorgesehen, daß in Fahrtrichtung gesehen, vor den Einzelkornsägeräten und in den Zwischenraum zwischen diese, die Bodenverdichtungselemente angeordnet sind, und daß der in den Zwischenräumen der Einzelkornsäaggregate verdichtete Boden zumindest in seinem oberen Bereich von in den Zwischenräumen angeordneten Bodenlockerungselementen wieder aufgelockert wird.

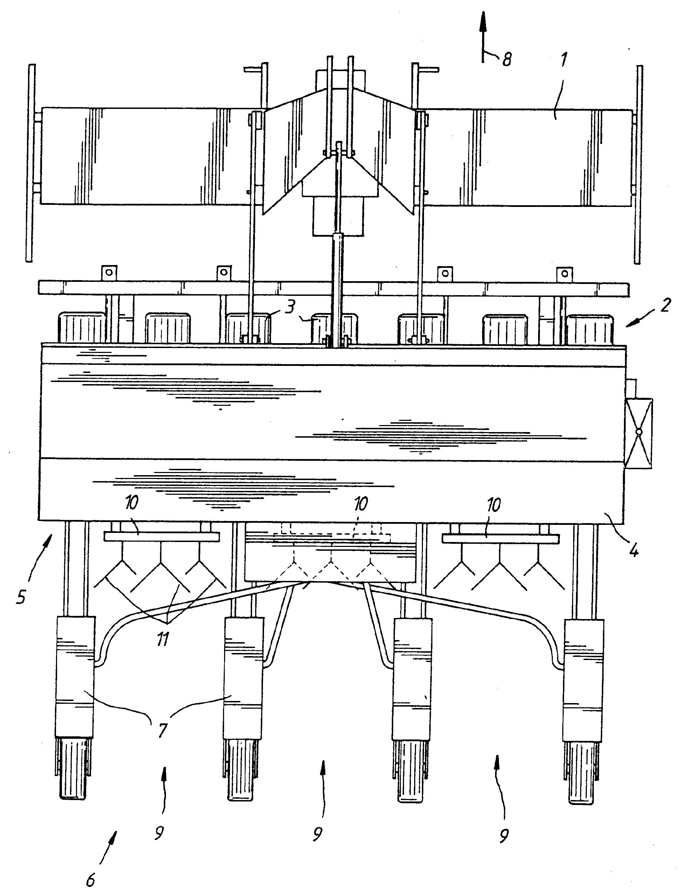

Eine vorteilhafte Ausführungsform nach der Erfindung sind der Beispielsbeschreibung und der Zeichnung zu entnehmen. Die Zeichnung zeigt
die Anordnung der erfindungsgemäßen Bodenlockerungselemente zwischen den einzelnen Einzelkornsäaggregaten des Einzelkornsägerätes, wobei das Einzelkornsägerät in Kombination mit einem Bodenbearbeitungsgerät, einer Nachlaufwalze und einer Düngerstreueinrichtung eingesetzt wird.

Die Gerätekombination besteht aus dem angetriebenen Bodenbearbeitungsgerät 1, der Nachlaufwalze 2 mit den nebeneinander angeordneten, als Reifen ausgebildeten Verdichtungselementen 3, der auf der Nachlaufwalze 2 aufgesattelten, den Düngervorratsbehälter 4 aufweisenden Düngerstreueinrichtung 5 und dem Einzelkornsägerät 6 mit seinen nebeneinander angeordneten Einzelkornsäaggregaten 7.

Die Gerätekombination wird in bekannter und daher nicht näher dargestellter Weise mit dem Dreipunktkraftheber eines Ackerschleppers gekoppelt, wobei die Gerätekombination dann während des Einsatzes in Fahrtrichtung 8 über die zu bearbeitende und zu bestellende Ackerfläche gezogen wird. Mittels des Bodenbearbeitungsgerätes 1 wird nun das Saatbett aufbereitet und von der die nebeneinander angeordneten Verdichtungselemente 3 aufweisenden Nachlaufwalze 2 rückverfestigt. Die Nachlaufwalze 2 ist derart ausgebildet, daß die streifenförmigen Verdichtungselemente 3 fluchtend zu den Säscharen der Einzelkornsäaggregate 7 und in den Zwischenräumen 9 der nebeneinander angeordneten Einzelkornsäaggregate 7 angeordnet sind.

Die Verdichtungselemente 3 der Nachlaufwalze 2 übernehmen die Rückverfestigung des von dem Bodenbearbeitungsgerät 1 bearbeiteten Bodens, so daß das von den Säscharen der Einzelkornsäaggregate 7 in den Boden abgelegte Saatgut optimale Wachstumsbedingungen vorfindet. Da nun die in den Zwischenräumen 9 zwischen den einzelnen Einzelkornsäaggregaten 7 angeordneten Verdichtungselemente 3 in diesem Bereich eine derartige streifenförmige Bodenverdichtung vornehmen, sind zur Einebnung dieser streifenförmigen Bodenverdichtung die zwischen den Einzelkornsäaggregaten 7 jeweils an einem Tragrahmen 10 sich befindlichen Bodenlockerungselemente 11 befestigt. Diese Bodenlockerungselemente 11 sind als Striegelelemente ausgebildet. Diese Striegelelemente 11 sorgen für eine Einebnung, d.h. für ein Schließen der von den Verdichtungselementen 3 der Nachlaufwalze 2 erzeugten Verdichtungsstreifen, wobei die Bodenoberfläche gelockert wird und lockere Bodenteile zu den Verdichtungsstreifen von den Striegelelementen 11 transportiert werden, so daß sich zwischen den einzelnen Saatreihen der Einzelkornsäaggregate 7 eine Bodenoberfläche mit lockerer und gekrümelter Bodenstruktur ergibt.

## Patentansprüche

1. Einzelkornsägerät, mit mehreren, an einem Rahmen in Fahrtrichtung (8) nebeneinander mit Abstand angeordneten Einzelkornsäaggregaten, die die seitliche Begrenzung von sich in Fahrtrichtung (8) erstreckenden Zwischenbereichen (9) bilden, dadurch gekennzeichnet, daß in dem Zwischenbereich (9) zwischen oder in Fahrtrichtung (8) vor den Einzelkornsäaggregaten (7) Bodenlockerungselemente (11), wie beispielsweise Striegelelemente etc., angeordnet sind.

2. Einzelkornsägerät nach Anspruch 1, dadurch gekennzeichnet, daß die Bodenlockerungselemente (11) als sogenannte Exaktstriegel mit Zustreichelementen, die schräg zur Fahrtrichtung (8) angestellt und im wesentlichen parallel zur Bodenoberfläche verlaufen, ausgebildet sind.

3. Einzelkornsägerät nach Anspruch 1, dadurch gekennzeichnet, daß die Bodenlockerungselemente (11) als aufrecht stehende Elemente ausgebildet sind, die mit ihren freien Enden in den Boden eingreifen.

4. Einzelkornsägerät, welches hinter einer Nachlaufwalze (2) angeordnet ist, die aus Verdichtungselementen (3) zum streifenförmigen Verdichten des Bodens besteht, wobei diese Verdichtungselemente (3) und die Säscharen der Einzelkornsäaggregate (7) in Fahrtrichtung (8) fluchtend angeordnet sind, nach einem oder mehreren der vorstehenden Ansprüche, dadurch gekennzeichnet, daß in Fahrtrichtung (8) gesehen, vor den Bodenlockerungselementen (11) in dem jeweiligen Zwischenbereich (9) zusätchlich ein Verdichtungselement (3) angeordnet ist, wobei der in dem Zwischenbereich (9) verdichtete Boden zumindest in seinem oberen Bereich mittels der Bodenlockerungselemente (11) wieder auflockerbar ist.

## Claims

1. Apparatus for sowing single seeds, including a plurality of units for sowing single seeds, which are disposed on a frame adjacent one another with a spacing therebetween, when viewed in the direction of travel (8), said units forming the lateral boundary of intermediate regions (9), which extend in the direction of travel (8), characterised in that ground loosening members (11), such as raking members, etc., for example, are disposed in the intermediate region (9) or in front of the units (7) for sowing single seeds when viewed in the direction of travel (8).

2. Apparatus for sowing single seeds according to claim 1, characterised in that the ground loosening members (11) are so-called precision raking combs having closing members, which are orientated inclinedly relative to the direction of travel (8) and extend substantially parallel to the surface of the ground.

3. Apparatus for sowing single seeds according to claim 1, characterised in that the ground loosening members (11) are upwardly extending members which engage in the ground with their free ends.

4. Apparatus for sowing single seeds, which is disposed behind a follower roller (2), which comprises compacting members (3) for the strip-like compaction of the ground, said compacting members (3) and the sowing coulters of the units (7) for sowing single seeds being disposed in alignment with the direction of travel (8), according to one or more of the preceding claims, characterised in that, when viewed in the direction of travel (8), a compacting member (3) is additionally disposed in front of the ground loosening members (11) and in the respective intermediate region (9), the ground which has been compacted in the intermediate region (9) being loosenable again in at least its upper region by means of the ground loosening members (11).

## Revendications

1. Semoir monograine ou de précision comportant plusieurs unités de semoir monograine fixées à un châssis, en étant juxtaposées transversalement à la direction de déplacement (8) et qui constituent les limites latérales d'intervalles (9) s'étendant dans la direction de déplacement, semoir caractérisé en ce que dans l'intervalle (9) ou en amont dans la direction de déplacement (8) des différentes unités (7), on a des éléments d'ameublissement (11) du sol comme, par exemple, des éléments de raclage, ou autres.

2. Semoir monograine selon la revendication 1, caractérisé en ce que les éléments d'ameublissement (11) sont des racleurs de précision avec des éléments de raclage disposés en biais par rapport à la direction de déplacement (8) et se déplaçant essentiellement de façon parallèle à la surface du sol.

3. Semoir monograine selon la revendication 1, caractérisé en ce que les éléments d'ameublissement du sol (11) sont des éléments montants dont les extrémités libres pénètrent dans le sol.

4. Semoir de précision prévu derrière un cylindre suiveur (2) lui-même composé d'éléments de compactage (3) pour compacter des bandes du sol, ces éléments de compactage (3) et les socs des unités de semoir monograine (7) étant alignés dans la direction de déplacement (8), selon une ou plusieurs des revendications précédentes, caractérisé en ce que vu dans la direction de déplacement (8), en amont des éléments d'ameublissement du sol (11) et dans l'intervalle respectif (9), il est prévu en outre un élément de compactage (3), et le sol compacté dans l'intervalle (9) est de nouveau ameubli au moins dans sa partie supérieure par des éléments d'ameublissement (11).
